# DEMANDE DE BREVET EUROPEEN

(11) **EP 2 639 490 A2**
(43) Date de publication de la demande: **18.09.2013**
(21) Numéro de dépôt: 13152445.6
(22) Date de dépôt: 24.01.2013
(51) Int. Cl.: F17C 13/08, F17C 13/12, F17C 5/06, F17C 7/00

(54) **Cadre pour bouteilles de fluide sous pression**

(30) Priorité: 15.03.2012 FR 1252329
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Verghade, Jean-Marie, 38410 SAINT MARTIN D'URIAGE (FR); Volstroff, Patrice, 69250 MONTANAY (FR)
(74) Mandataire: De Cuenca, Emmanuel Jaime

(57) **Abrégé**

Cadre pour bouteilles de fluide sous pression comprenant un châssis (11), un raccord (2) fluidique, le cadre comprenant au moins un organe (4, 5) de manutention destiné à coopérer avec un appareil de levage et de déplacement du cadre, le au moins un organe de manutention comprenant au moins l'un parmi : un anneau (4) de levage, au moins une ouverture (5) dans le châssis (11) destinée à accueillir une fourche d'un chariot élévateur, caractérisé en ce que le au moins un organe (4, 5) de manutention du cadre est sélectivement déplaçable entre un état actif dans lequel l'organe (4, 5) de manutention est susceptible de coopérer avec un appareil de levage conjugué et un état inactif dans lequel organe (4, 5) de manutention n'est pas susceptible de coopérer avec un appareil de levage conjugué, le cadre comprenant en outre un cache (1) sélectif du raccord (2), le cache (1) étant mobile entre une première position d'occultation de la seconde extrémité du raccord (2) fluidique et une seconde position dans laquelle la seconde extrémité du raccord (2) fluidique n'est pas occultée, et en ce que le cadre comporte un mécanisme (7) de liaison et de transmission de mouvement reliant le au moins un organe (4, 5) de manutention au cache (1) et en ce que le mécanisme (7) de liaison et de transmission de mouvement actionne le au moins un organe (4, 5) de manutention vers son état inactif lorsque le cache (1) est déplacé dans sa seconde position.

## Description

La présente invention concerne un cadre pour bouteilles de fluide sous pression.

L'invention concerne plus particulièrement un cadre pour bouteilles de fluide sous pression comprenant un châssis définissant un volume de stockage d'une ou plusieurs bouteilles de fluide sous pression, un raccord fluidique comprenant une première extrémité destiné à être relié fluidiquement aux bouteilles stockées sur le châssis et une seconde extrémité destinée à être raccordée sélectivement avec un appareil de soutirage/remplissage du gaz des bouteilles, le cadre comprenant au moins un organe de manutention destiné à coopérer avec un appareil de levage et de déplacement du cadre, le au moins un organe de manutention comprenant au moins l'un parmi : un anneau de levage, au moins une ouverture dans le châssis destinée à accueillir une fourche d'un chariot élévateur

L'invention concerne les cadres de bouteilles de fluide sous pression, c'est-à-dire les dispositifs comprenant un châssis formant un support pour plusieurs bouteilles de fluide. Ces cadres comprennent généralement un raccord commun pour les bouteilles. Du fait de leur masse et de leur encombrement, ces cadres sont munis d'organes de manutention destinés à coopérer avec des appareils de levage (grues ou chariots élévateurs).

De nombreux accidents sont susceptibles de se produire sur les installations de remplissage de cadres de bouteilles de gaz ou sur les installations de distribution de gaz à partir de cadres de bouteilles. L'accident le plus fréquent est l'arrachage du flexible relié au cadre du à une manutention du cadre de bouteilles alors que le cadre est encore connecté fluidiquement à l'installation de remplissage ou de distribution.

Des nombreux dispositifs existent sur les installations afin d'éviter ces accidents potentiellement dangereux. Par exemple, il est connu d'utiliser une pancarte apposée sur le cadre par l'opérateur pour rappeler que le cadre ne doit pas être déplacé lorsqu'il est connecté fluidiquement.

Une autre solution connue consiste à utiliser une barrière automatique qui empêche l'accès au cadre pour un chariot élévateur lorsque le cadre est en cours d'utilisation.

Une autre solution consiste à utiliser des dispositifs de signalisation automatiques qui sont déployés en même temps qu'un flexible de soutirage/remplissage est branché au cadre.

Ces solutions sont cependant imparfaites car, soit elles reposent sur un facteur humain, soit elles sont difficilement déployables pour des raisons de coût et de logistique (notamment pour la solution avec barrière).

Un but de la présente invention est de pallier tout ou partie des inconvénients de l'art antérieur relevés ci-dessus.

A cette fin, le cadre selon l'invention, par ailleurs conforme à la définition générique qu'en donne le préambule ci-dessus, est essentiellement **caractérisé en ce que** le au moins un organe de manutention du cadre est sélectivement déplaçable entre un état actif dans lequel l'organe de manutention est susceptible de coopérer avec un appareil de levage conjugué et un état inactif dans lequel organe de manutention n'est pas susceptible de coopérer avec un appareil de levage conjugué, le cadre comprenant en outre un cache sélectif du raccord, le cache étant mobile entre une première position d'occultation de la seconde extrémité du raccord fluidique pour empêcher son raccordement à un appareil de soutirage et une seconde position dans laquelle la seconde extrémité du raccord fluidique n'est pas occultée, pour permettre son raccordement à un appareil de soutirage et en ce que le cadre comporte un mécanisme de liaison et de transmission de mouvement reliant le au moins un organe de manutention au cache et en ce que le mécanisme de liaison et de transmission de mouvement actionne le au moins un organe de manutention vers son état inactif lorsque le cache est déplacé dans sa seconde position.

Par ailleurs, des modes de réalisation de l'invention peuvent comporter l'une ou plusieurs des caractéristiques suivantes :
- le mécanisme de liaison et de transmission de mouvement actionne le au moins un organe de manutention vers son état actif lorsque le cache est déplacé dans sa première position,
- le mécanisme de liaison et de transmission est du type mécanique,
- le mécanisme de liaison et de transmission comprend au moins l'un parmi : un câble, un système de bielles articulées,
- le au moins un organe de manutention comprend un anneau de levage, ledit anneau de levage étant mobile en rotation et/ou en translation entre une position en saillie par rapport au châssis correspondant à un son état actif et une position escamotée par rapport au châssis correspondant à un son état inactif,
- le au moins un organe de manutention comprend un anneau de levage, le au moins un anneau de levage étant muni d'une butée d'obturation sélective du passage de l'anneau; la butée étant reliée au mécanisme de liaison et de transmission de mouvement et étant mobile entre une première position d'obturation du passage de l'anneau correspondant à un état inactif et une position de non-obturation du passage de l'anneau correspondant à un état actif,
- le au moins un organe de manutention comprend une pluralité d'ouvertures dans le châssis destinées à accueillir chacune une fourche d'un chariot élévateur, au moins une ouverture étant munie d'un obturateur sélectif de l'ouverture; le ou les obturateurs étant relié(s) au mécanisme de liaison et de transmission de mouvement et étant mobile(s) entre une première position d'obturation de l'ouverture correspondant à un état inactif et une position de non-obturation de l'ouverture correspondant à un état actif,
- le cadre comporte un organe de commande manuel mobile relié à l'un au moins parmi : le au moins un organe de manutention, le cache, et le mécanisme de liaison et de transmission de mouvement, pour commander manuellement sélectivement le déplacement simultané du cache et de l'organe de manutention,
- le cadre comprend plusieurs organes distincts de manutention du cadre et en ce que l'organe de commande manuel est déplaçable dans une position dite « intermédiaire » dans laquelle le cache est disposé dans sa première position d'occultation tandis que seule une partie des organes de manutention est disposé dans un état inactif tandis que l'autre partie des organes de manutention est disposée dans un état actif.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles:
- la figure 1 représente une de face, schématique et partielle, illustrant un cadre selon une première configuration possible de l'invention,
- la figure 2 représente similaire à celle de la figure 1 dans laquelle le cadre est dans une seconde configuration possible de l'invention,
- la figure 3 représente similaire à celle de la figure 1 dans laquelle le cadre est dans une troisième configuration possible de l'invention,
- la figure 4 représente une vue en perspective, schématique et partielle, illustrant un mécanisme de transmission de mouvement à des organes de manutention d'un cadre selon une réalisation possible de l'invention,
- la figure 5 représente une vue en perspective, schématique et partielle, d'un détail du mécanisme de la figure 4.

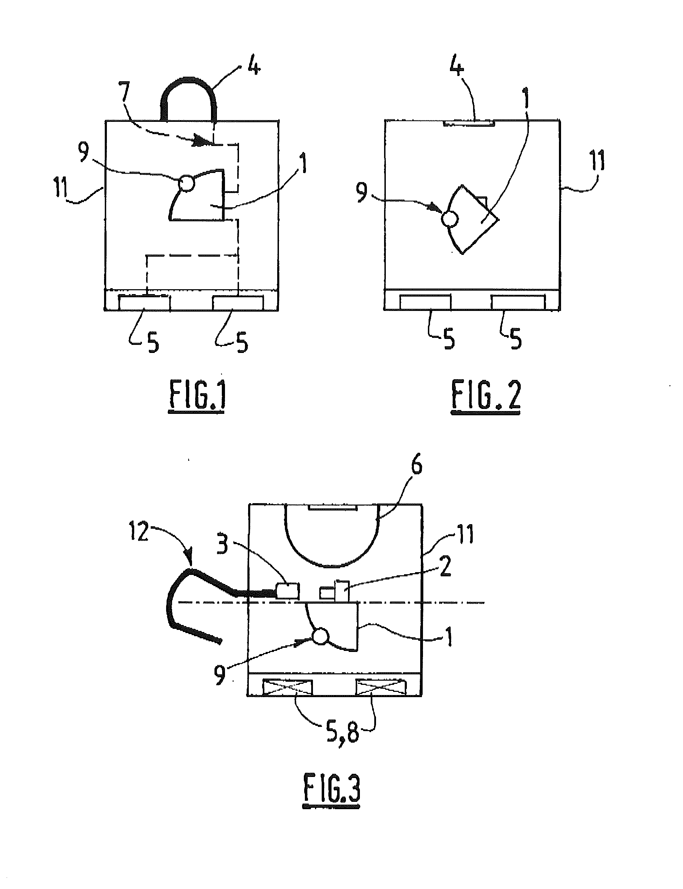

L'invention concerne un cadre de bouteilles, en particulier pour bouteilles de gaz tel que de l'hydrogène. Comme schématisé aux figures 1 à 3, un tel cadre comprend un châssis 11 formant un support (panier) pour un ensemble de bouteilles (bouteilles non représentées par soucis de simplification). Le cadre comprend un raccord 2 fluidique comprenant une première extrémité destiné à être relié fluidiquement aux bouteilles stockées sur le châssis 11 et une seconde extrémité destinée à être raccordée sélectivement avec un appareil 3 de soutirage et/ou de remplissage du gaz des bouteilles (cf. figure 3, le raccord 3 de l'appareil de soutirage/remplissage est situé au niveau d'une extrémité d'une conduite 12 flexible). Le raccord 2 fluidique du cadre appartient par exemple à un robinet, avec ou sans détendeur intégré, qui peut être commun aux bouteilles du cadre.

Le cadre illustré aux figures comprend un anneau 4 de levage destiné à être utilisé pour le soulèvement du cadre. L'anneau 4 de levage est situé sur une portion supérieure du châssis 11. Cet anneau 4 de levage forme un organe de manutention destiné à coopérer avec un appareil de levage et de déplacement du cadre, par exemple le crochet d'une grue.

Le cadre comprend également des ouvertures 5 formées en partie basse du châssis 11. Ces ouvertures 5 parallèles sont destinées à accueillir chacune une branche d'une fourche d'un chariot élévateur du cadre.

Le cadre comprend également un cache 1 sélectif du raccord 2 fluidique. Le cache 1 est mobile entre une première position d'occultation de la seconde extrémité du raccord 2 fluidique, pour empêcher son raccordement à un appareil 3 de soutirage et une seconde position dans laquelle la seconde extrémité du raccord 2 fluidique n'est pas occultée, pour permettre son raccordement à un appareil 3 de soutirage. Le cache 1 comporte par exemple une plaque métallique.

Selon une particularité avantageuse, l'anneau 4 de levage est sélectivement déplaçable entre un état actif dans lequel l'anneau 4 fait saillie par rapport au châssis (cf. figure 1 pour permettre sa coopération avec un crochet) et un état inactif escamoté par rapport au châssis (cf. figures 2 et 3 pour empêcher sa coopération avec un crochet).

De même, au moins une ouverture 5 et de préférence toutes les ouvertures 5 sont munies d'un obturateur 8 sélectif respectif. Chaque obturateur 8 est mobile entre une première position d'obturation de l'ouverture 5 correspondant à son état inactif (empêchant l'entrée d'une branche d'une fourche d'un chariot élévateur cf. figure 3) et une position de non-obturation de l'ouverture 5 correspondant à son état actif (permettant l'entrée d'une branche d'une fourche de chariot élévateur, cf. figures 1 et 2).

Le cadre comporte en outre un mécanisme 7 de liaison et de transmission de mouvement reliant le cache 1 à l'anneau 4 et aux ouvertures 5/obturateurs 8. Le mécanisme 7 de liaison et de transmission de mouvement conditionne les positions des organes de manutention (anneau 4 et ouvertures 5/obturateurs 8) en fonction de la position du cache 1. Ainsi, comme visible à la figure 3, l'anneau 4 et les ouvertures 5 sont en position inactive lorsque le cache 1 est déplacé dans sa seconde position.

Ainsi, le cadre comprend un dispositif intégré qui empêche physiquement la manutention du cadre (via l'anneau 4 ou les ouvertures 5) lorsqu'un flexible 12 est raccordé ou raccordable au raccord 2. En effet, dès que le raccord 2 est accessible, l'anneau 4 est escamoté et les logements 5 sont obturés. Dans cette configuration de la figure 3 il est impossible de manutentionner le cadre. Toute erreur humaine est ainsi évitée.

De préférence, le mécanisme 7 de liaison et de transmission de mouvement actionne l'anneau 4 et les ouvertures 5 vers leur état actif lorsque le cache 1 est déplacé dans sa première position.

Comme représenté aux figures 1 et 2, il est possible de prévoir
- une seconde position du cache 1 (occultant le raccord 2) et disposant l'anneau 4 et les ouvertures 5 en position active,
- une troisième position du cache 1 (occultant le raccord 2) et disposant uniquement les ouvertures 5 en position active (anneau escamoté inactif).

Ainsi, dans la configuration de la figure 3, le raccord 2 est accessible et les organes 4, 5 de manutention sont inactifs. L'opérateur peut connecter ou déconnecter le flexible 2 ou une lyre de raccordement mais ne peut pas manutentionner le cadre.

Dans la configuration de la figure 2, le raccord 2 du cadre ne peut pas être raccordé à un utilisateur 3. L'anneau 4 de levage n'est pas accessible à la grue mais les ouvertures 5 sont disponibles pour une fourche de chariot élévateur. Cette position intermédiaire est avantageuse car elle permet de manutentionner les cadres via un chariot élévateur sans se préoccuper de l'anneau 4 de levage qui est escamoté. Cela est particulièrement utile dans le cas ou l'on souhaite empiler les cadres en stockage, en utilisation et en transport.

Dans la configuration de la figure 1, le raccord 2 du cadre ne peut pas être raccordé à un utilisateur 3. L'anneau 4 de levage est relevé et actif. De même, les ouvertures 5 peuvent accueillir les fourches d'un chariot élévateur.

Comme illustré aux figures 1 à 3, le cadre peut comporter un organe 9 de commande manuel mobile solidaire du cache 1 pour commander manuellement sélectivement le déplacement du cache 1 et donc, simultanément, le déplacement de l'anneau 4 et des ouvertures 5 (organes 8). Cet organe 9 de commande actionnable manuellement est par exemple une poignée solidaire du cache 1 (cf. figures 1 à 3) ou distincte du cache 1 mais solidaire du mécanisme 7 de liaison et de transmission.

Les positions de la poignée 9 peuvent être indexées.

Comme représenté à la figure 3, un indicateur 6 visuel peut être prévu, tel une pancarte pour signifier la position connectée du raccord 2 et signifier également que le cadre ne doit pas être manutentionné.

Partant de la configuration de la figure 1 ou de celle de la figure 2, pour connecter un appareil 3 au raccord 2 du cadre, l'utilisateur doit déplacer le cache 1 (rotation par exemple). Ce mouvement du cache 1 libère l'accès au raccord 2 et, simultanément escamote l'anneau 4 et obstrue les ouvertures 5.

Bien entendu, il est préférable que le cadre de bouteille ne puisse pas être manutentionné par d'autres moyens que ceux prévus par conception.

L'escamotage sélectif de l'anneau 4 de levage peut être réalisé par exemple via une translation verticale de l'anneau 4 à l'intérieur du cadre et/ou par une rotation de l'anneau (90°par exemple).

Après utilisation (en fin de remplissage du cadre ou lorsque les bouteilles du cadre sont vides), l'opérateur doit débrancher le flexible 12 de raccordement de l'appareil 3 et manoeuvrer le mécanisme afin de rendre de nouveau accessible et utilisable les organes 4, 5 de manutentions.

Le cadre selon l'invention permet ainsi de disposer d'un dispositif de sécurité fiable, peu coûteux et qui ne consomme pas d'énergie.

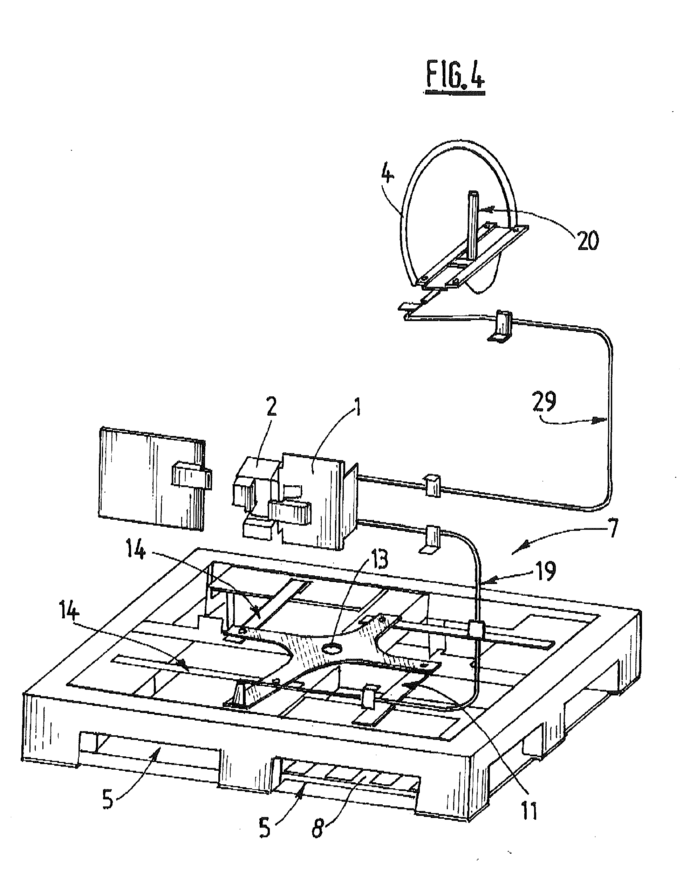

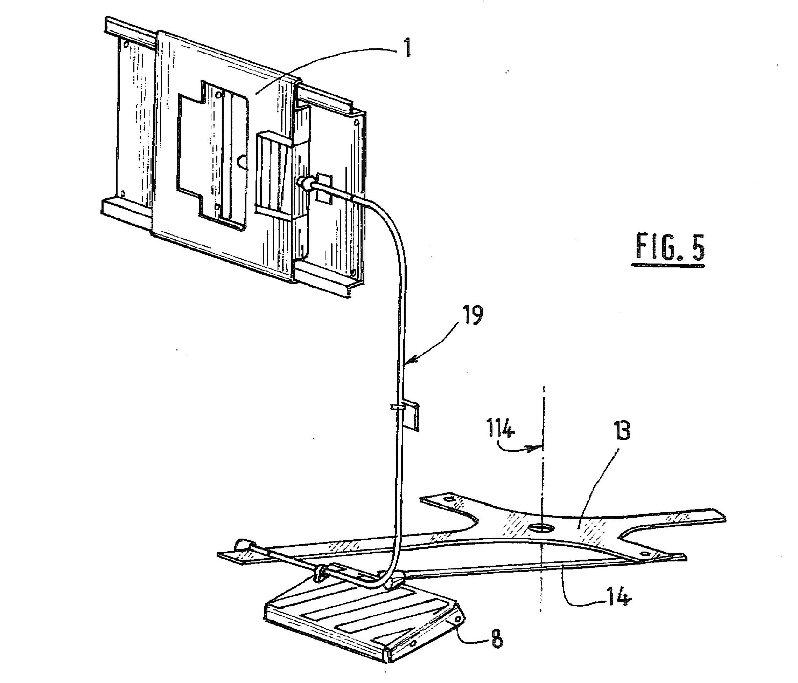

Dans l'autre exemple des figures 4 et 5, le cache 1 est mobile en translation horizontalement (horizontalement lorsque le cadre est posé sur une surface horizontale). Selon sa position horizontale, le cache 1 obture ou non un accès au raccord 2. Le cache 1 est relié mécaniquement aux organes 4, 5 de manutention via un système de câble(s) 19, 29, de préférence gainé(s). Par exemple un premier câble 19 relie le volet 1 aux obturateurs 8 mobiles via un mécanisme comprenant une pièce 13 centrale rotative et des bielles 14. La pièce centrale est par exemple rotative autour d'un axe 114 vertical. Par exemple, le premier câble 19 est relié à une extrémité de la pièce centrale 13 rotative. Cette pièce 13 rotative et reliée à chaque obturateur 8 via une bielle 14 respective. La translation du cache 1 actionne le premier câble 19 qui tire sélectivement la pièce centrale 13 rotative pour la faire tourner. La rotation de la pièce centrale 13 rotative commande en réaction le déplacement (rotation par exemple) des obturateurs 8 via les bielles respectives. Ainsi, le fait de rendre accessible le raccord 2 du robinet provoque en réaction le pivotement des obturateurs 8 pour fermer les ouvertures 5 (et inversement). Par exemple quatre obturateurs 8 sont prévus pour respectivement quatre ouvertures 5.

Ce mécanisme ou une partie de celui-ci peut s'appliquer à un cadre ayant des ouvertures dans sa partie supérieure.

Le cache 1 peut être relié, via un second câble 29 de préférence gainé, à une butée 20 mobile. Cette butée 20 est représentée sous la forme d'un pion mais peut avoir toute autre forme, notamment la forme d'une plaque. La butée 20 obstrue sélectivement le passage de l'anneau 4 de levage.

Le déplacement du cache 1 en position permettant l'accès au raccord 2 déplace la butée 20 en position de saillie obturant le passage de l'anneau 4 de levage. Inversement, lorsque le cache 1 empêche l'accès au raccord 2, la butée 20 est rétractée libérant le passage de l'anneau 4 de manutention.

De préférence, la position de repos stable est la position permettant la manutention du cadre et empêchant l'accès au raccord 2 du robinet. Cette configuration est par exemple obtenue via au moins un ressort de rappel dans le mécanisme 7.

## Revendications

1. Cadre pour bouteilles de fluide sous pression comprenant un châssis (11) définissant un volume de stockage d'une ou plusieurs bouteilles de fluide sous pression, un raccord (2) fluidique comprenant une première extrémité destiné à être relié fluidiquement aux bouteilles stockées sur le châssis (11) et une seconde extrémité destinée à être raccordée sélectivement avec un appareil (3) de soutirage/remplissage du gaz des bouteilles, le cadre comprenant au moins un organe (4, 5) de manutention destiné à coopérer avec un appareil de levage et de déplacement du cadre, le au moins un organe de manutention comprenant au moins l'un parmi : un anneau (4) de levage, au moins une ouverture (5) dans le châssis (11) destinée à accueillir une fourche d'un chariot élévateur, **caractérisé en ce que** le au moins un organe (4, 5) de manutention du cadre est sélectivement déplaçable entre un état actif dans lequel l'organe (4, 5) de manutention est susceptible de coopérer avec un appareil de levage conjugué et un état inactif dans lequel organe (4, 5) de manutention n'est pas susceptible de coopérer avec un appareil de levage conjugué, le cadre comprenant en outre un cache (1) sélectif du raccord (2), le cache (1) étant mobile entre une première position d'occultation de la seconde extrémité du raccord (2) fluidique pour empêcher son raccordement à un appareil (3, 12) de soutirage et une seconde position dans laquelle la seconde extrémité du raccord (2) fluidique n'est pas occultée, pour permettre son raccordement à un appareil (3) de soutirage et **en ce que** le cadre comporte un mécanisme (7) de liaison et de transmission de mouvement reliant le au moins un organe (4, 5) de manutention au cache (1) et **en ce que** le mécanisme (7) de liaison et de transmission de mouvement actionne le au moins un organe (4, 5) de manutention vers son état inactif lorsque le cache (1) est déplacé dans sa seconde position.

2. Cadre selon la revendication 1, **caractérisé en ce que** le mécanisme (7) de liaison et de transmission de mouvement actionne le au moins un organe (4, 5) de manutention vers son état actif lorsque le cache (1) est déplacé dans sa première position.

3. Cadre selon la revendication 1 ou 2, **caractérisé en ce que** le mécanisme (7) de liaison et de transmission est du type mécanique.

4. Cadre selon l'une quelconque des revendications 1 à 3, **caractérisé en ce que** le mécanisme (7) de liaison et de transmission comprend au moins l'un parmi : un câble (19, 29), un système de bielles (14) articulées.

5. Cadre selon l'une quelconque des revendications 1 à 4, **caractérisé en ce que** le au moins un organe (4, 5) de manutention comprend un anneau (4) de levage, ledit anneau (4) de levage étant mobile en rotation et/ou en translation entre une position en saillie par rapport au châssis (11) correspondant à un son état actif et une position escamotée par rapport au châssis (11) correspondant à un son état inactif.

6. Cadre selon l'une quelconque des revendications 1 à 5, **caractérisé en ce que** le au moins un organe (4, 5) de manutention comprend un anneau (4) de levage, le au moins un anneau (4) de levage étant muni d'une butée (20) d'obturation sélective du passage de l'anneau (4); la butée (20) étant reliée au mécanisme (7) de liaison et de transmission de mouvement et étant mobile entre une première position d'obturation du passage de l'anneau (4) correspondant à un état inactif et une position de non-obturation du passage de l'anneau (4) correspondant à un état actif.

7. Cadre selon l'une quelconque des revendications 1 à 6, **caractérisé en ce que** le au moins un organe (4, 5) de manutention comprend une pluralité d'ouvertures (5) dans le châssis (11) destinées à accueillir chacune une fourche d'un chariot élévateur, au moins une ouverture (5) étant munie d'un obturateur (8) sélectif de l'ouverture; le ou les obturateurs (8) étant relié(s) au mécanisme (7) de liaison et de transmission de mouvement et étant mobile(s) entre une première position d'obturation de l'ouverture (5) correspondant à un état inactif et une position de non-obturation de l'ouverture (5) correspondant à un état actif.

8. Cadre selon l'une quelconque des revendications 1 à 7, **caractérisé en ce qu'il** comporte un organe (9) de commande manuel mobile relié à l'un au moins parmi : le au moins un organe (4, 5) de manutention, le cache (1), et le mécanisme (7) de liaison et de transmission de mouvement, pour commander manuellement sélectivement le déplacement simultané du cache (1) et de l'organe (4, 5) de manutention.

9. Cadre selon la revendication 8, **caractérisé en ce qu'il** comprend plusieurs organes (4, 5) distincts de manutention du cadre et **en ce que** l'organe (9) de commande manuel est déplaçable dans une position dite « intermédiaire » dans laquelle le cache (1) est disposé dans sa première position d'occultation tandis que seule une partie (4) des organes de manutention est disposé dans un état inactif tandis que l'autre partie (5) des organes (4, 5) de manutention est disposée dans un état actif.
